# EUROPEAN PATENT APPLICATION

(11) **EP 3 435 441 A1**
(43) Date of publication of application: **30.01.2019**
(21) Application number: 17769251.4
(22) Date of filing: 10.02.2017
(51) Int. Cl.: H01M 2/16, H01M 2/14, H01M 10/0525

(54) **ISOLATION MEMBRANE FOR ELECTROCHEMICAL APPARATUS, AND PREPARATION METHOD AND APPLICATION THEREOF**

(30) Priority: 23.03.2016 CN 201610168129
(71) Applicant: Shanghai Energy New Materials Technology Co., Ltd., Shanghai 201399 (CN)
(72) Inventor: CHENG, Alex, Shanghai 201399 (CN); BAO, Jinzhen, Shanghai 201399 (CN); HE, Fangbo, Shanghai 201399 (CN)
(74) Representative: Bottero, Carlo
(86) International application number: PCT/CN2017/073222
(87) International publication number: WO 2017/161974

(57) **Abstract**

The present invention discloses a separator for an electrochemical device and a preparing method and use thereof. The separator comprises a porous base film layer and a functional layer; the porous base film layer optionally has an inorganic material coating on one or two surfaces thereof; the functional layer is disposed on one or two sides of the porous base film layer, and the functional layer contains at least one organic material capable of forming a gel electrode when contacting with a non-aqueous electrolyte solution.

## Description

### Technical field

The present invention relates to the field of electrochemistry, in particular to a separator for an electrochemical device and a method of preparing the same and use thereof.

### Background art

Traditional electrochemical devices (such as lithium-ion secondary batteries) generally use a polyolefin porous base film as separator; a liquid electrolyte is prepared with a lithium salt, an organic solvent and an additive; and a positive electrode, a negative electrode, and a shell are used to complete the assembly. In order to increase the cycle life of such electrochemical devices, there are usually two improving methods in industry: (1) increasing the perfusion volume of electrolyte to ensure adequate supply of electrolyte at the end of the cycle; however, this may cause bulging and deforming of the device, and leakage tend to occur during use, not only causing serious pollution to the electrochemical device and its environment, but also directly affecting the reliability of the electrochemical device; (2) adding an adhesive layer on the separator to form good adhesion at the interface of the positive electrode (or negative electrode)/separator, thereby forming better SEI film to improve cycle life; however, this method leads to an increase in the thickness of the separator, affects the overall thickness and energy density of electrochemical devices, and cannot completely solve the problem of inadequate electrolyte.

In view of this, gel electrolytes have been developed, which consist of organic macromolecules, initiators and liquid electrolytes. The gel electrolytes have certain adhesion to the positive electrode (or negative electrode)/separator in an electrochemical device under suitable conditions, and do not easily cause the bulging and leakage of the device. However, such gel electrolytes require high performance for raw materials such as initiators, complex preparation processes, strict storage conditions (temperature, humidity, irradiation, time, and other factors), and high process costs; moreover, a phenomenon of local accumulation of micelles tend to occur in the electrochemical devices, thereby affecting electrochemical performance and appearance of the devices.

Therefore, there is a need in the art to provide a simple, efficient, low-cost and high-performance electrochemical device and a key separator product for the device.

### Summary of the invention

The present invention aims at providing a high-performance separator for electrochemical devices, so that the electrochemical device obtained using the separator has good interface adhesion, good appearance and hardness.

In a first aspect, the present invention provides a separator for an electrochemical device, the separator comprises a porous base film layer and a functional layer; the porous base film layer optionally has an inorganic material coating on one or two surfaces thereof; the functional layer is disposed on one or two sides of the porous base film layer, and the functional layer comprises at least one organic material capable of forming a gel electrolyte when contacting with a non-aqueous electrolyte solution.

In an embodiment, the inorganic material is at least one selected from the group consisting of alumina, silica, titania, ceria, calcium carbonate, calcium oxide, zinc oxide, magnesium oxide, cerium titanate, calcium titanate, barium titanate, lithium phosphate, lithium titanium phosphate, lithium aluminum titanium phosphate, lithium nitride, and lithium lanthanum titanate; the organic material is at least one selected from organic polymer materials and organic small molecule materials.

In another embodiment, the organic polymer material is one or more selected from the group consisting of polyvinylidene fluoride, polyacrylic acid modified polyvinylidene fluoride, fluorinated polypropylene, tetrapropyl fluorubber, fluorinated polyurethanes, hydroxy-terminated fluoropolyester polysiloxanes, polyvinyl butyral, ethylene-vinyl acetate copolymer, styrene-isoprene-styrene block copolymers, acrylic resins, acrylic emulsions, polyacrylic acid-styrene copolymers, polyvinyl pyrrolidone, styrene-butadiene rubbers, epoxy resins, neopentyl glycol diacrylates, sodium polyacrylate, polytetrafluoroethylene, polyimides, polyamides, polyesters, cellulose derivatives, and polysulfones. The organic polymer materials are more preferably polyvinylidene fluoride.

In another embodiment, the organic small molecule material is one or more selected from the group consisting of an aromatic or aliphatic compound having a polyisocyanate functional group, a compound having a polyamino functional group, and a compound having a polyhydroxy functional group. The aromatic or aliphatic compound having a polyisocyanate functional group is one or more selected from the group consisting of toluene diisocyanate (TDI), isophorone diisocyanate (IPDI), diphenylmethane diisocyanate (MDI), hexamethylene diisocyanate, toluene-2,4-diisocyanate, dicyclohexylmethane diisocyanate (HMDI), triphenylmethane triisocyanate and polymethylene polyphenyl polyisocyanate (PAPI). Toluene diisocyanate (TDI) and/or polymethylene polyphenyl polyisocyanate (PAPI) are preferred.

In another embodiment, the compound having a polyamino functional group or the compound having a polyhydroxy functional group are one or more selected from the group consisting of ethylene glycol, propylene glycol, butylene glycol, 1,2,6-hexatriol, polyvinyl alcohol, polyethyleneimine, glucose, chitosan, starch, cellulose, polyhydric phenol, aromatic polyol, and polyethylene glycol; and starch, polyvinyl alcohol, and/or cellulose are more preferable.

In another embodiment, the organic material is one or more selected from the group consisting of polyvinylidene fluoride having a molecular weight of not less than 100,000, polyvinyl alcohol having a molecular weight of not less than 10,000, toluene diisocyanate (TDI), polymethylene polyphenyl isocyanate (PAPI), starch, cellulose, and chitosan; wherein the molecular weight of polyvinylidene fluoride is preferably between 100,000 and 1,000,000, and the molecular weight of polyvinyl alcohol is preferably between 10,000 and 200,000.

In another embodiment, the functional layer has a thickness of 0.1-10 µm, more preferably 0.5-5 µm.

In a second aspect, the present invention provides a method of preparing a separator for an electrochemical device as described above, comprising the steps of:
(1) mixing an organic material and deionized water to form an organic matter slurry;
(2) coating the organic matter slurry on a porous base film; the porous base film optionally has an inorganic coating on at least one surface of the porous base film;
(3) drying the coated porous base film to obtain the separator for an electrochemical device as described above.

In another embodiment, in step (1) the deionized water is used in an amount of 20% to 99%, more preferably 60% to 95%, based on the total weight of the organic matter slurry formed.

In another embodiment, the coating in step (2) is performed at a speed of 1-300 m/min, more preferably 50-100 m/min.

In another embodiment, the drying in step (3) is performed in a multi-section oven, and the temperature of the oven is set such that the temperature of the beginning and ending sections of the oven is not higher than the temperature in the middle section; the drying temperature is 25-130°C, more preferably 35-60°C.

In another embodiment, the organic matter slurry in step (1) further contains a binder and/or other additive.

In a third aspect, the present invention provides use of a separator according to present invention in the preparation of an electrochemical device.

In another embodiment, the electrolyte in the electrochemical device is a non-aqueous electrolyte; the non-aqueous electrolyte contains a lithium salt and one more solvent(s) selected from the group consisting of ethylene carbonate (EC), propylene carbonate (PC), diethyl carbonate (DEC) and ethyl methyl carbonate (EMC).

In another embodiment, the non-aqueous electrolyte further contains other additive(s) selected from the group consisting of triethylamine, triethanolamine, dibutyltin acetate, dibutyltin dilaurate, ethylamine, acetanilide, sodium bisulfite and stannous isooctoate.

In another embodiment, the external conditions for preparing the electrochemical device require one or more of the following conditions: a temperature of 30-90°C, a pressure of 0.1-1.5 MPa, ultraviolet irradiation, and a time of 0.5-12 h.

In a fourth aspect, the present invention provides an electrochemical device comprising a positive electrode, a negative electrode, a separator between the positive electrode and the negative electrode, and a non-aqueous electrolyte, wherein the separator is the separator for an electrochemical device according to the first aspect mentioned above.

In another embodiment, the non-aqueous electrolyte contains a lithium salt and one or more solvent(s) selected from the group consisting of ethylene carbonate (EC), propylene carbonate (PC), diethyl carbonate (DEC) and ethyl methyl carbonate (EMC).

In another embodiment, the non-aqueous electrolyte further contains other additive(s) selected from the group consisting of triethylamine, triethanolamine, dibutyltin acetate, dibutyltin dilaurate, ethylamine, acetanilide, sodium bisulfite, and stannous isooctoate.

In a fifth aspect, the present invention provides use of an organic material in the preparation of a separator for an electrochemical device, wherein the organic material is one or more selected from an organic polymer material and an organic small molecule material; the electrochemical device uses a non-aqueous electrolyte.

In another preferred embodiment, the organic polymer material is one or more selected from the group consisting of polyvinylidene fluoride, polyacrylic acid modified polyvinylidene fluoride, fluorinated polypropylene, tetrapropyl fluorubbers, fluorinated polyurethanes, hydroxy-terminated fluoropolyester polysiloxanes, polyvinyl butyral, ethylene-vinyl acetate copolymers, styrene-isoprene-styrene block copolymers, acrylic resins, acrylic emulsions, polyacrylic acid-styrene copolymers, polyvinyl pyrrolidone, styrene-butadiene rubbers, epoxy resins, neopentyl glycol diacrylates, sodium polyacrylates. The organic polymer material is more preferably polyvinylidene fluoride.

In another embodiment, the organic small molecule material is one or more selected from the group consisting of an aromatic or aliphatic compound having a polyisocyanate functional group, a compound having a polyamino functional group, and a compound having a polyhydroxy functional group. The aromatic or aliphatic compound having a polyisocyanate functional group is one or more selected from the group consisting of toluene diisocyanate (TDI), isophorone diisocyanate (IPDI), diphenylmethane diisocyanate (MDI), hexamethylene diisocyanate, toluene-2,4-diisocyanate, dicyclohexylmethane diisocyanate (HMDI), triphenylmethane triisocyanate and polymethylene polyphenyl polyisocyanate (PAPI); and toluene diisocyanate (TDI) and/or polymethylene polyphenyl polyisocyanate (PAPI) are preferred; the compound having a polyamino functional group and the compound having a polyhydroxy functional group are one or more selected from the group consisting of ethylene glycol, propylene glycol, butylene glycol, 1,2,6- hexatriol, polyvinyl alcohol, polyethyleneimine, glucose, chitosan, starch, cellulose, polyhydric phenols, aromatic polyols, and polyethylene glycol; and starch, polyvinyl alcohol and/or cellulose are more preferable.

In another preferred embodiment, the organic material is one or more selected from the group consisting of polyvinylidene fluoride having a molecular weight of not less than 100,000, polyvinyl alcohol having a molecular weight of not less than 10,000, toluene diisocyanate (TDI), polymethylene polyphenyl isocyanate (PAPI), starch, cellulose, and chitosan; wherein the molecular weight of polyvinylidene fluoride is preferably between 100,000 and 1,000,000, and the molecular weight of polyvinyl alcohol is preferably between 10,000 and 200,000.

In another embodiment, the non-aqueous electrolyte contains a lithium salt and on or more solvent(s) selected from the group consisting of ethylene carbonate (EC), propylene carbonate (PC), diethyl carbonate (DEC) and ethyl methyl carbonate (EMC). Accordingly, the present invention provides a simple, efficient, low-cost and high-performance electrochemical device and a key separator product thereof.

### Specific embodiments

As used herein, "an electrochemical device" includes a lithium secondary battery, a lithium-ion secondary battery, a supercapacitor, a fuel cell, a solar battery, and the like; and the lithium-ion secondary battery includes a polymer lithium-ion secondary battery.

As used herein, "porous base film" is a porous film formed from at least one following materials: vinyl polymers or copolymers, polypropylene, polyimides, polyamides, polyesters, cellulose derivatives, and polysulfones; or a blend of at least one of above materials and at least one inorganic material such as alumina, silica, titania, ceria, calcium carbonate, calcium oxide, zinc oxide, magnesium oxide, cerium titanate, calcium titanate, barium titanate, lithium phosphate, lithium titanium phosphate, lithium aluminum titanium phosphate, lithium nitride, and lithium lanthanum titanate; wherein the vinyl polymers or copolymers may be at least one of polyethylene, polyethylene vinyl acetate copolymers. Preferably, the porous base film may be a three-layer composite of polypropylene/polyethylene/polypropylene. Preferably, the porous base film is immiscible with deionized water.

In the present invention, unless otherwise specified, the numerical range "a-b" represents an abbreviation of any combination of real numbers between a and b, where both a and b are real numbers. For example, a numeric value range of "0-5" indicates that all the real numbers between "0-5" have been listed herein, and "0-5" is only an abbreviation of the combination of these numerical values.

In the present invention, unless otherwise specified, the integer numerical range "a-b" represents an abbreviation of any integer combination between a and b, where both a and b are integers. For example, the integer value range "1-N" represents 1, 2 ... N, where N is an integer.

The "range" disclosed herein is in the form of a lower limit and a upper limit. There may be one or more lower limits, and one or more upper limits, respectively. A given range is defined by selecting a lower limit and an upper limit. The selected lower and upper limits define boundaries of the specific range. All ranges that can be defined in this way are inclusive and combinable, i.e. any lower limit can be combined with any upper limit to form a range. For example, ranges of 60-120 and 80-110 are listed for specific parameters; it is expectable that the ranges of 60-110 and 80-120 can be interpreted. In addition, if the minimum range values 1 and 2 are listed, and if the maximum range values 3, 4, and 5 are listed, the following ranges are all expectable: 1-3, 1-4, 1-5, 2-3, 2-4, and 2-5.

After extensive and indepth researches, the inventors have found that in a separator formed by taking a porous base film (optionally having an inorganic material coating layer on at least one surface thereof) as main structure and coating a functional layer on either or both sides of the porous base film, the organic material in the functional layer rapidly absorbs the electrolyte and swells in the electrolyte or reacts with the electrolyte upon contacting the non-aqueous electrolyte in the electrochemical device, and forms a gel or solid electrolyte, which bonds the separator/positive (negative) electrode sheet and forms a smooth and uniform interface, thereby improving electrochemical performance and prolonging cycle life. On such basis, the present invention has been completed.

### Separator

The separator according to present invention comprises a porous base film layer and a functional layer coated thereon, and the porous base film layer optionally has an inorganic material coating on at least one surface thereof; and the functional layer is disposed on either or both sides of the porous base film layer. When the porous base film layer has an inorganic material coating on at least one surface thereof, the functional layer is coated on the inorganic material coating. The functional layer comprises at least one organic material capable of forming a gel electrolyte when contacting with a non-aqueous electrolyte solution.

The inorganic material is at least one of alumina, silica, titania, ceria, calcium carbonate, calcium oxide, zinc oxide, magnesium oxide, cerium titanate, calcium titanate, barium titanate, lithium phosphate, lithium titanium phosphate, lithium aluminum titanium phosphate, lithium nitride, and lithium lanthanum titanate.

The organic materials contain at least one of organic polymer materials and organic small molecule materials. The organic polymer materials include, but are not limited to, one or more of the following materials: polyvinylidene fluoride, polyacrylic acid modified polyvinylidene fluoride, fluorinated polypropylene, tetrapropyl fluorubbers, fluorinated polyurethanes, hydroxy-terminated fluoropolyester polysiloxanes, polyvinyl butyral, ethylene-vinyl acetate copolymers, styrene-isoprene-styrene block copolymers, acrylic resins, acrylic emulsions, polyacrylic acid-styrene copolymers, polyvinyl pyrrolidone, styrene-butadiene rubbers, epoxy resins, neopentyl glycol diacrylates, sodium polyacrylates, polytetrafluoroethylene, polyimides, polyamides, polyesters, cellulose derivatives, polysulfones and so on.

The organic small molecule materials include, but are not limited to, one or more of the following: an aromatic or aliphatic compound having a polyisocyanate functional group, a compound having a polyamino functional group, and a compound having a polyhydroxy functional group. The aromatic or aliphatic compound having a polyisocyanate functional group includes at least one of toluene diisocyanate (TDI), isophorone diisocyanate (IPDI), diphenylmethane diisocyanate (MDI), hexamethylene diisocyanate, toluene-2,4-diisocyanate, dicyclohexylmethane diisocyanate (HMDI), triphenylmethane triisocyanate and polymethylene polyphenyl polyisocyanate (PAPI). The compound having a polyamino functional group or the compound having a polyhydroxy functional group includes at least one of ethylene glycol, propylene glycol, butylene glycol, 1,2,6-hexatriol, polyvinyl alcohol, polyethyleneimine, glucose, chitosan, starch, cellulose, polyhydric phenols, aromatic polyols, and polyethylene glycol.

In an embodiment of the present invention, the functional layer further includes a binder and/or other additive. The binder is at least one of sodium carboxymethyl cellulose, polymethylmethacrylate, vinyl acetate, polyurethane, polyamide, styrene-isoprene copolymer; said other additive is at least one of polyvinyl alcohol, polyethylene glycol, 1,4-butanediol, polyether, methanol, ethanol, stearic acid, sodium dodecyl benzene sulfonate, quaternized lecithin, amino acid-type or betaine-type fatty acid glyceride, starch, fatty acid sorbitan (Span), polysorbate (Tween).

In an embodiment of the present invention, the organic material has a particle diameter of 0.01 µm to 10 µm, preferably 0.01 µm to 1 µm.

In an embodiment of the present invention, the functional layer has a thickness of 0.1 µm-10 µm, preferably 1 µm-5 µm.

In an embodiment of the present invention, the ratio of the coverage area of the functional layer on the porous base film to the total area is 5% to 100%, preferably 20% to 80%.

In an embodiment of the present invention, the functional layer has a porosity of 10%-50%.

### Preparing method of the separator

A method of preparing a separator for an electrochemical device according to present invention includes the steps of:
step 1: mixing an organic material and deionized water to form an organic matter slurry;
step 2: coating the organic matter slurry on a porous base film, and the porous base film optionally has an inorganic coating on at least one surface thereof;
step 3: drying the coated porous base film to obtain a separator for an electrochemical device according to present invention.

In the step 1, the organic matter slurry further comprises a binder and/or other additive.

In the step 1, the mixing includes stirring a mixture of an organic material and deionized water uniformly; the stirring may be at least one of kneading, mechanical stirring, ball milling, and ultrasonic dispersion.

In the step 1, the amount of deionized water is 20% to 99%, preferably 60% to 95%, based on the total weight of the organic matter slurry formed.

The binder is added mainly for the purpose of bonding the coating on the separator more firmly. If the organic material per se already has an adhesive effect, the binder may not be used; other additive optionally added are mainly used to improve the stability of the slurry, and the additives usually do not affect the performance of products, and the additives mainly include surfactants and the like.

In an embodiment of the present invention, in the step 1, the mass ratio of the binder is 0% to 40%, preferably 0% to 20%, based on the solid content in the organic matter slurry.

In an embodiment of the present invention, in the step 1, the mass ratio of said other additive is 0.01%-60%, preferably 0.1%-10%, based on the solid content in the organic matter slurry.

In an embodiment of the present invention, when the organic material, binder, and other additive are mixed with a solvent in the step 1, the adding procedure for each component may be adjusted; a preferred mixing procedure is: taking a part of the organic material; adding the binder to the organic material and stirring to make the binder uniformly dispersed in the organic material; adding other additive and stirring to make said other additive uniformly dispersed in the slurry; finally, adding an appropriate amount of deionized water as a solvent, and stirring uniformly to obtain an organic matter slurry with a certain consistency; the organic concentration in the organic matter slurry is 1 to 80% by weight.

In the step 2, the coating may be one of dipping coating, gravure coating, screen printing, transfer coating, extrusion coating, spray coating, and cast coating. The coating speed is 1-300 m/min, preferably 50-100 m/min.

In the step 3, the drying may be carried out in a multi-section oven; preferably, the temperature of the oven is set such that the temperature of the beginning and ending sections of the oven is lower than the temperature in the middle section; and the drying temperature is 25-130°C, more preferably 35-60°C.

### Electrochemical device

The electrochemical device according to present invention comprises a positive electrode, a negative electrode, a separator provided by the present invention between the positive electrode and the negative electrode, and a non-aqueous electrolyte. The non-aqueous electrolyte contains a lithium salt and a solvent(s) selected from the group consisting of ethylene carbonate (EC), propylene carbonate (PC), diethyl carbonate (DEC), and methyl ethyl carbonate (EMC); the lithium salt is preferably LiPF₆. The non-aqueous electrolyte further contains other additive including at least one of triethylamine, triethanolamine, dibutyltin diacetate, dibutyltin dilaurate, ethylamine, acetanilide, sodium bisulfite, and stannous isooctoate.

A method for preparing the electrochemical device according to present invention comprises the steps of:
(i) dispersing a positive electrode active material, a conductive agent, and a binder in a solvent to prepare a positive electrode slurry, then coating and compacting to prepare a positive electrode sheet;
(ii) dispersing a negative electrode active material, a conductive agent, and a binder in a solvent to prepare a negative electrode slurry, then coating and compacting to prepare a negative electrode sheet;
(iii) formulating EC, PC, DEC, and EMC into a non-aqueous organic solvent, adding LiPF₆ as a lithium salt, adding a small amount of additives to complete the preparation of an non-aqueous electrolyte;
(iv) winding or laminating the positive electrode sheet, the separator, and the negative electrode sheet sequentially to prepare a jelly roll, placing the jelly roll in a packing shell, injecting an electrolyte into the packing shell and sealing; under certain external conditions, a gel or solid electrolyte is formed in the inside of the battery, and the bonding between positive(negative) electrode/separator is achieved, thereby the preparation of the electrochemical device is completed.

In an embodiment of the present invention, the external conditions during the preparation include one or more of temperature 30-90 °C, pressure 0.1-1.5MPa, ultraviolet irradiation, and time 0.5-12h.

The features mentioned above in the present invention or the features mentioned in the examples can be combined at will. All the features disclosed in the specification of the present application can be used in combination with any composition. Each feature disclosed in the specification can be replaced with any alternative feature that can provide identical, equivalent or similar purposes. Therefore, unless specified otherwise, the features disclosed herein are only general examples of equivalent or similar features.

The main advantages of present invention are:
1. After the organic material used in the separator according to present invention meets contacts a non-aqueous electrolyte provided by present invention, it rapidly absorbs the electrolyte and swells in the electrolyte or reacts with the electrolyte to form a gel or solid electrolyte, so as to bond the separator/positive (negative) electrode sheet and form a smooth and uniform interface, thereby improving electrochemical performance and prolonging cycle life.
2. The gel network structure formed by the organic material involved in the separator according to present invention has a very strong liquid storage capacity. In the early stage of the use of the electrochemical device, the gel can store excess electrolyte temporarily; after the electrochemical device is recycled for a long time and the lithium salt in the electrolyte is gradually consumed, the lithium ion in the gel will be released gradually, thereby the cycle life is prolonged.
3. The lithium salt in the non-aqueous electrolyte used in the electrochemical device according to present invention has been dispersed in the network structure formed by the organic material, and the organic material has good contact with the porous base film layer of the separator and ion conduction channel, and thus can promote the movement of lithium ions through the separator, and improve the dynamic performance and low temperature performance of the electrochemical device.
4. The separator according to the invention does not react before contacting the liquid electrolyte, and is easy to store, and the electrochemical device manufactured has no free liquid electrolyte, and thus has better safety.

The present invention will be further described hereinafter in combination with specific examples. It should be understood that these examples are used only to illustrate present invention and are not intended to limit the scope of present invention. The experimental method in the following examples whose specific condition is not specified are generally in accordance with conventional conditions or conditions recommended by manufacturers. Unless otherwise specified, all percentages, ratios, proportions, or parts are measured by weight.

The unit of weight-volume percent in the present invention is well known to those skilled in the art, and refers to, for example, the weight of a solute in a 100 ml solution.

Unless otherwise defined, all professional and scientific terms used herein have the same meaning as those familiar to the skilled person in the art. In addition, any methods and materials similar or equivalent to those described herein can be used in the method of the present invention. The preferred methods and materials described herein are for demonstration purposes only.

The substances used in the following examples are commercially available from China National Pharmaceutical Group Corporation.

### Comparative Example 1

Preparation of a positive electrode sheet: lithium cobalt dioxide, conductive carbon, and polyvinylidene fluoride as a binder were added in a mass ratio of 96:2:2 to N-methylpyrrolidone (NMP) and mixed uniformly to form a positive electrode slurry, and then the positive electrode slurry was coated on a 12µm aluminum foil which is used as a positive electrode current collector, and then dried, compacted, slit to obtain the positive electrode sheet.

Preparation of a negative electrode sheet: graphite, conductive carbon, sodium carboxymethyl cellulose as a thickener, and styrene butadiene rubber as a binder were added in a mass ratio of 97:0.5:1.0:1.5 to deionized water and mixed uniformly to prepare a negative electrode slurry, and then the negative electrode slurry was coated on a 10µm copper foil which is used as a negative electrode current collector, and then dried, compacted, slit to obtain a negative electrode sheet.

Separator: a polyethylene single-layer microporous separator with a thickness of 12 µm was used as the separator.

Preparation of non-aqueous electrolyte: LiPF₆, ethylene carbonate (EC) and diethyl carbonate (DEC) were formulated into a solution with a LiPF₆ concentration of 1.0 mol/L (wherein the mass ratio of EC and DEC was 6:4), to obtain a non-aqueous electrolyte.

Cell forming: the positive electrode sheet, the separator, and the negative electrode sheet were wound into a cell; then the cell was placed in an aluminum-plastic package bag, which was infused with the above non-aqueous electrolyte; then the cell was subjected to encapsulation and formation to obtain a battery.

### Comparative Example 2

The procedures of preparing the positive electrode sheet, the negative electrode sheet, the non-aqueous electrolyte, and the cell forming were as described in Comparative Example 1, but the separator was manufactured by the following method:
16 parts by mass of alumina powder and 8 parts by mass of deionized water were added to a dual planetary mixer and stirred at room temperature for 60 min; then 2 parts by mass of polyacrylic acid solution was added and mixed at room temperature for 1 hour to obtain a ceramic slurry;
The ceramic slurry was coated on both sides of 12µm thick polypropylene porous base film by transfer coating method at a coating speed of 25 m/min;
The drying was carried out in a three-section oven (each section was 3 meters long, and the temperature of each section was 38°C, 45°C, and 42°C, respectively); and the thickness of the resulting ceramic coating on either side was measured to be 4 µm after drying.

### Comparative Example 3

The procedures of preparing the positive electrode sheet, the negative electrode sheet, the separator, and the cell forming were as described in Comparative Example 1, but the electrolyte was a gel electrolyte comprising a non-aqueous electrolyte, methyl methacrylate as a monomer, and benzoyl peroxide as an initiator, in an amount of 94.5 parts by weight, 5 parts by weight and 0.5 part by weight, respectively; wherein the composition of the non-aqueous electrolyte was the same as that in Comparative Example 1, not tired in words herein.

### Example 1

The procedures of preparing the positive electrode sheet, the negative electrode sheet, and non-aqueous electrolyte were as described in Comparative Example 1, but the separator was prepared by the following method:
60 parts by mass of polyvinylidene fluoride having a molecular weight of 800,000, 0.5 part by mass of polyvinyl alcohol having a molecular weight of 20,000, 9.5 parts by mass of an acrylic resin having a molecular weight of 80,000, and 30 parts by mass of deionized water were added to a dual planetary mixer and mixed at room temperature for 0.5 hour to obtain an organic matter slurry;
The organic matter slurry was coated on the both sides of a 12µm thick polypropylene porous base film by spray coating method at a coating speed of 50 m/min;
The drying was carried out in a three-section oven (each section was 3 meters long, and the temperature of each section was 38°C, 40°C, and 40°C, respectively), and the thickness of the resulting coating on either side was measured to be 2 µm after drying.

The electrochemical device was prepared by the following manner: the positive electrode sheet, the separator, and the negative electrode sheet were wound into a cell, and then the cell was placed in an aluminum-plastic package bag, which was infused with the above non-aqueous electrolyte and then sealed; then the cell was held at a temperature of 85°C and under a pressure of 0.8 MPa for 12 hours, and subjected to formation to obtain a battery.

### Example 2

The procedures of preparing the positive electrode sheet and the negative electrode sheet were as described in Comparative Example 1, but the separator was prepared by the following method:
4 parts by mass of toluene diisocyanate (with a mass fraction of 30%, the solvent was water), 0.1 parts by mass of starch, 9.9 parts by mass of an acrylic resin having a molecular weight of 80,000, and 86 parts by mass of deionized water were added to a dual planetary mixer and mixed at room temperature for 0.5 hour to obtain an organic matter slurry;
The organic matter slurry was coated on the both sides of a 12µm thick polypropylene porous base film by spray coating method at a coating speed of 50 m/min;
The drying was carried out in a three-section oven (each section was 3 meters long, and the temperature of each section was 38°C, 40°C, and 40°C, respectively), and the thickness of the resulting coating on either side was measured to be 2 µm after drying.

The non-aqueous electrolyte was the same as that in the Comparative Example 1, except that 0.1% by weight of triethylamine was further added.

The electrochemical device was prepared by the following manner: the positive electrode sheet, the separator, and the negative electrode sheet were wound into a cell, and then the cell was placed in an aluminum-plastic package bag, which was infused with the non-aqueous electrolyte comprising 0.1% by weight of triethylamine and then sealed; then the cell was held at a temperature of 75°C and under a pressure of 0.5 MPa for 10 hours, and subjected to formation to obtain a battery.

### Example 3

The procedures of preparing the positive electrode sheet and the negative electrode sheet were as described in Comparative Example 1, but the separator was prepared by the following method:
4 parts by mass of hydroxy-terminated fluoropolyester polysiloxane (with a mass fraction of 30%, the solvent was ethylene carbonate), 0.5 part by mass of alumina, 9.5 parts by mass of an acrylic resin having a molecular weight of 70,000, and 86 parts by mass of deionized water were added to a dual planetary mixer and mixed at room temperature for 0.5 hour to obtain an organic matter slurry;
The organic matter slurry was coated on the both sides of a 12µm thick polypropylene porous base film by spray coating method at a coating speed of 50 m/min;
The drying was carried out in a three-section oven (each section was 3 meters long, and the temperature of each section was 38°C, 40°C, and 40°C, respectively), and the thickness of the resulting coating on either side was measured to be 4 µm after drying.

The non-aqueous electrolyte was the same as that in Comparative Example 1, except that 0.1% by weight of triethylamine was further added.

The electrochemical device was prepared by the following manner: the positive electrode sheet, the separator, and the negative electrode sheet were wound into a cell, and then the cell was placed in an aluminum-plastic package bag, which was infused with the non-aqueous electrolyte comprising 0.1% by weight of triethylamine and then sealed; then the cell was held at a temperature of 75°C and under a pressure of 0.5 MPa for 10 hours, and subjected to formation to obtain a battery.

### Example 4

The procedures of preparing the positive electrode sheet and the negative electrode sheet were as described in Comparative Example 1, but the separator was prepared by the following method:
15 parts by mass of toluene diisocyanate (with a mass fraction of 30%, the solvent was water), 0.1 parts by mass of chitosan, 4.9 parts by mass of an acrylic resin having a molecular weight of 80,000, and 80 parts by mass of deionized water were added to a dual planetary mixer and mixed at room temperature for 0.5 hour to obtain an organic matter slurry;
The organic matter slurry was coated by roll coating on both sides of a 12µm thick polypropylene porous base film which has been coated with 2µm thick alumina ceramic coating on one side at a coating speed of 50 m/min;
The drying was carried out in a three-section oven (each section was 3 meters long, and the temperature of each section was 38°C, 40°C, and 40°C, respectively), and the thickness of the resulting organic coating on either side was measured to be 4 µm after drying.

The non-aqueous electrolyte was the same as that in Comparative Example 1, except that 0.1% by weight of sodium bisulfite was further added.

The electrochemical device was prepared by the following manner: the positive electrode sheet, the separator, and the negative electrode sheet were wound into a cell, and then the cell was placed in an aluminum-plastic package bag, which was infused with the non-aqueous electrolyte containing 0.1% by weight of sodium bisulfite and then sealed, then the cell was held at a temperature of 90°C and under a pressure of 0.5 MPa for 10 hours, and subjected to formation to obtain a battery.

### Example 5

The procedures of preparing the positive electrode sheet and the negative electrode sheet were as described in Comparative Example 1, but the separator was prepared by the following method:
8 parts by mass of polymethylene polyphenyl polyisocyanate (with a mass fraction of 30%, the solvent was water), 4 parts by mass of cellulose, 13 parts by mass of an acrylic resin having a molecular weight of 90,000, and 75 parts by mass of deionized water were added to a dual planetary mixer and mixed at room temperature for 0.5 hour to obtain an organic matter slurry;
The organic matter slurry was coated by roll coating on the non-ceramic side of a 14µm thick polypropylene porous base film which has been coated with 2µm thick alumina ceramic coating on one side at a coating speed of 100 m/min;
The drying was carried out in a three-section oven (each section was 3 meters long, and the temperature of each section was 38°C, 40°C, and 40°C, respectively), and the thickness of the resulting organic coating on one side was measured to be 4 µm after drying.

The non-aqueous electrolyte was the same as that in Comparative Example 1, except that 0.1% by weight of triethanolamine was further added.

The electrochemical device was prepared by the following manner: the positive electrode sheet, the separator, and the negative electrode sheet were wound into a cell, and then the cell was placed in an aluminum-plastic package bag, which was infused with the non-aqueous electrolyte containing 0.1% by weight triethanolamine and then sealed, then the cell was held at 90°C and 0.5 MPa for 12 hours, and subjected to formation to obtain a battery.

### Performance Testing

Following performance tests were carried out on the separators and the lithium ion batteries in Examples 1-5 and Comparative Examples 1-3:
1) Porosity test of the separators: testing with a mercury porosimeter.
2) Permeability test of the separators: testing with a permeability tester.
3) Adhesion of separator interface in batteries: fresh batteries were discharged and disassembled; an area with no abnormality in the appearance where the separator and the positive and negative electrodes are laminated together was taken and cut into a sample with a width of 15mm and a length of 100mm, and the tension (unit: N) between two strips of the separator/the positive electrode bonded together or the separator/the negative electrode bonded together was tested using a tensile machine, and adhesion stress= tension/0.015 (unit: N/m).
4) Puncture resistance test of the separator: the separator was pierced with a 0.5 mm diameter pin at a speed of 50 mm/min.
5) Thermal shrinkage test of the separator: the separator was punched into a square piece with a die cutter; the separator was placed in a constant-temperature oven at 120°C, dried for 2 hours and then taken out; the shrinkages of the separator before and after heat treatment were measured.
6) Room temperature cycling performance test of lithium-ion battery: the lithium-ion secondary battery was charged at a rate of 0.5C and discharged at a rate of 0.5C at room temperature for 500 cycles, and the capacity retention was calculated using the formula: capacity retention = (the battery capacity after 500 cycles / the battery capacity at room temperature before the cycling) × 100%.
7) Low-temperature cycling performance test of lithium-ion battery: the lithium-ion secondary battery was subjected to 10 cycles under full charge (4.2V) at -10°C environment, and the capacity retention was calculated after the cycling, and then the battery was disassembled to observe the lithium precipitation at the interface.
8) Appearance test of lithium-ion battery: the battery after capacity testing was observed at room temperature to find if there is free electrolyte and micelle agglomeration.
9) Battery hardness: the battery after capacity testing was placed between two pieces of iron with a distance of 30mm. The battery was pressed down using an iron rod with a round head on a tensile machine. When the downward displacement was 1mm, the pressure required was measured in a unit of kgf@1mm.
10) Drop test of the lithium-ion battery: the lithium-ion battery was dropped vertically from the height of 1.5m and repeated for 30 times; then the battery was observed to find if there is leakage, ignition and smoking.

The performance test results of the separators and the lithium-ion batteries of Comparative Examples 1-3 and Examples 1-5 were shown in Table 1.

**Table 1: Performance test results of the separators and the lithium-ion batteries prepared in the Comparative examples and the Examples**

| Item | Separator | | | | | lithium-ion battery | | | | |
|---|---|---|---|---|---|---|---|---|---|---|
| | Porosity (%) | Permeability (s/100cc) | Interface adhesion (N/m) | Puncture resistance (Kgf) | Thermal Shrinkage (%) | Appearance | Hardness (kgf@ 1mm) | Capacity Retention, cycling at room temp. (%) | capacity retention, at low temp.(%) and interface | Dropping test |
| Comp. Ex. 1 | 36 | 181 | 0 | 0.275 | 4.5 | bulging | 1.37 | 70 | 85, slight precipitation of lithium | Leakage, ignition |
| Comp. Ex. 2 | 38 | 193 | 0 | 0.283 | 0.81 | bulging | 1.43 | 75 | 82, slight precipitation of lithium | Leakage, smoking |
| Comp. Ex.3 | 43 | 199 | 5 | 0.279 | 0.95 | micelle agglomeration | 2.19 | 83 | 83, slight precipitation of lithium | Smoking |
| Ex.1 | 47 | 192 | 13.1 | 0.283 | 0.78 | OK | 2.56 | 90 | 100, OK | OK |
| Ex.2 | 44 | 196 | 12.5 | 0.272 | 0.65 | OK | 2.37 | 92 | 99, OK | OK |
| Ex.3 | 46 | 195 | 15.4 | 0.286 | 1.10 | OK | 2.68 | 89 | 99, OK | OK |
| Ex.4 | 42 | 197 | 10.9 | 0.277 | 0.85 | OK | 2.41 | 91 | 99, OK | OK |
| Ex.5 | 40 | 190 | 12.1 | 0.280 | 0.72 | OK | 2.48 | 90 | 99, OK | OK |

From the results of Table 1, it can be seen that, when comparing the Example 1-5 with the Comparative Examples 1-2, the interface adhesion of the separators in the batteries of Examples 1-5 are significantly enhanced, mainly due to the fact that all the organic coatings in Examples 1-5 have formed adhesive gel or solid electrolytes in the batteries, which can be seen also from the appearance inspection and the dropping test of the batteries. The batteries of Examples 1-5 do not bulge, and the batteries have no leakage after dropping.

Comparing the Examples 1-5 and Comparative Example 3, although Comparative Example 3 also involves a gel electrolyte, due to its relatively high requirement on the preparation process of the gel electrolyte, the interface adhesion in the battery of Comparative Example 3 is significantly weaker than that in the batteries of Examples 1-5. In addition, micelle agglomeration occurred in the battery of Comparative Example 3, and thus affected the capacity retentions of the battery when cycling at room temperature and cycling at a low temperature, both being less than 90%, and slight precipitation of lithium occurs at the interface.

The porosity, permeability, puncture resistance, and thermal shrinkage of the separators in Examples 1 to 5 are substantially at the same level, wherein the thermal shrinkage is significantly lower than that of Comparative Example 1, and has no obvious difference as compared with the separator coated with a ceramic coating in Comparative Example 2. In terms of battery hardness, the hardness of the batteries of Examples 1-5 is significantly higher than that of the batteries of Comparative Examples 1-2.

From the long-term cycling test and the low-temperature cycling test of the batteries, it can be seen that the batteries of Examples 1-5 have capacity retentions of about 90% in long-term cycling, and have capacity retentions close to 100% when cycling at low temperature, which are significantly better than those of the batteries in Comparative Examples 1-3. In addition, it has been found after disassembling that no lithium is precipitated at the interface in the batteries of Examples 1-5. In the batteries of Comparative Examples 1-2, on the one hand, the poor adhesion between the positive and negative electrodes and the separator affects the uniformity and compactness of the SEI; on the other hand, the electrolyte does not infiltrate well, which results in a relatively fast capacity attenuation in the cycling, thereby having relatively low capacity retention in the cycling at room temperature and relatively low capacity retention at low temperature. In Comparative Example 3, although the interface adhesion is improved as compared to Comparative Example 1-2, the cycling attenuation is relatively fast due to the problems of micelle agglomeration and lithium ions transmision channel; and it is found after disassembling that slight lithium precipitation occurs at the interface.

The above descriptions are merely preferred embodiments of the present invention, and are not intended to limit the scope of the substantive technical content of the present invention. The substantive technical content of the present invention is defined broadly within the scope of the claims of the present application. Any technical entity or method performed by any other person, if exactly the same as defined in the scope of the claims of the present application, or an equivalent modification, will be deemed to be covered by the scope of the claims.

## Claims

1. A separator for an electrochemical device, **characterized in that** the separator comprises a porous base film layer and a functional layer; the porous base film layer optionally has an inorganic material coating on at least one surface of the porous base film layer; the functional layer is disposed on one or two sides of the porous base film layer, and the functional layer comprises at least one organic material capable of forming a gel electrolyte when contacting with a non-aqueous electrolyte solution.

2. A separator according to claim 1, **characterized in that** the inorganic material is at least one selected from the group consisting of alumina, silica, titania, ceria, calcium carbonate, calcium oxide, zinc oxide, magnesium oxide, cerium titanate, calcium titanate, barium titanate, lithium phosphate, lithium titanium phosphate, lithium aluminum titanium phosphate, lithium nitride, and lithium lanthanum titanate.

3. A separator according to claim 1, **characterized in that** the organic material is an organic polymer material and/or an organic small molecule material.

4. A separator according to claim 3, **characterized in that** the organic polymer material is one or more selected from the group consisting of polyvinylidene fluoride, polyacrylic acid modified polyvinylidene fluoride, fluorinated polypropylene, tetrapropyl fluoride rubber, fluorinated polyurethanes, hydroxy-terminated fluoropolyester polysiloxanes, polyvinyl butyral, ethylene-vinyl acetate copolymer, styrene-isoprene-styrene block copolymers, acrylic resins, acrylic emulsions, polyacrylic acid-styrene copolymers, polyvinyl pyrrolidone, styrene-butadiene rubbers, epoxy resins, neopentyl glycol diacrylates, sodium polyacrylate, polytetrafluoroethylene, polyimides, polyamides, polyesters, cellulose derivatives, and polysulfones; preferably polyvinylidene fluoride.

5. A separator according to claim 3, **characterized in that** the organic small molecule material is one or more selected from the group consisting of an aromatic or aliphatic compound having a polyisocyanate functional group, a compound having a polyamino functional group, and a compound having a polyhydroxy functional group.

6. A separator according to claim 1, **characterized in that** the organic material is one or more selected from the group consisting of polyvinylidene fluoride having a molecular weight of not less than 100,000, polyvinyl alcohol having a molecular weight of not less than 10,000, toluene diisocyanate (TDI), polymethylene polyphenyl isocyanate (PAPI), starch, cellulose, and chitosan; wherein the molecular weight of polyvinylidene fluoride is preferably between 100,000 and 1,000,000, and the molecular weight of polyvinyl alcohol is preferably between 10,000 and 200,000.

7. A separator according to claim 1, **characterized in that** the functional layer has a thickness of 0.1 to 10 µm, preferably 0.5 to 5 µm.

8. A method for preparing a separator for an electrochemical device according to any one of claims 1 to 7, **characterized in that** the method comprises the steps of:
(1) mixing an organic material and deionized water to form an organic matter slurry;
(2) coating the organic matter slurry on a porous base film; the porous base film optionally has an inorganic coating on at least one surface of the porous base film;
(3) drying the coated porous base film to obtain the separator for an electrochemical device.

9. Use of a separator according to any one of claims 1-7 in the manufacture of an electrochemical device.

10. An electrochemical device, **characterized in that** the electrochemical device comprises a positive electrode, a negative electrode, a separator between the positive electrode and the negative electrode, and a non-aqueous electrolyte, wherein the separator is as defined in any one of claims 1 to 7.
